# EUROPÄISCHE PATENTSCHRIFT

(11) **EP 1 039 987 B1**
(45) Veröffentlichungstag und Bekanntmachung des Hinweises auf die Patenterteilung: **28.08.2002**
(21) Anmeldenummer: 98965102.1
(22) Anmeldetag: 07.12.1998
(51) Int. Cl.: B25B 1/24, B23Q 1/58

(54) **LINEARFÜHRUNG**
LINEAR GUIDE
GUIDE LINEAIRE

(30) Priorität: 19.12.1997 DE 19756695
(43) Veröffentlichungstag der Anmeldung: 04.10.2000
(73) Patentinhaber: HILMA-RÖMHELD GmbH, 57271 Hilchenbach (DE)
(72) Erfinder: KRAUSE, Ludwig, Matthäus, D-79837 Ibach/St. Blasien (DE)
(74) Vertreter: von Ahsen, Erwin-Detlef, Dipl.-Ing.
(86) Internationale Anmeldenummer: DE9803582
(87) Internationale Veröffentlichungsnummer: WO99032263

(56) Entgegenhaltungen:
- EP-A- 0 134 398
- DE-B- 1 929 488
- DE-C- 653 070
- DE-C- 679 844
- DE-C- 831 223
- FR-A- 1 222 358
- US-A- 2 518 102

## Beschreibung

Die Erfindung betrifft eine Linearführung, insbesondere für Spannwerkzeuge, mit einem in oder an einem Schlittenbett geführten, verfahrbaren Schlitten , der mindestens eine erste Spannbacke trägt, die relativ zu einer mit dem Schlittenbett verbundenen, festen, zweiten Spannbacke verfahrbar ist und im Schlittenbett oder im Schlitten mindestens zwei in Bewegungsrichtung des Schlittens verlaufende, in einer Ebene gegenüberliegenden Nuten vorgesehen sind.

Eine derartige Linearführung bzw. eine derartiges Spannwerkzeug ist beispielsweise aus der US-PS 2,518,102 bekannt. Hierbei wird ein verfahrbarer Schlitten von einem Schlittenbett getragen, wobei im Schlittenbett und im Schlitten Nuten vorgesehen sind, in die eine Vielzahl von Lagerkugeln eingesetzt sind, um die Reibung zwischen Schlitten und Schlittenbett zu verringern.

Die bekannten Linearführungen weisen jedoch ein nicht unerhebliches Spiel zwischen Schlittenbett und Schlitten auf, so dass ihre Verwendung in Spannwerkzeugen, in denen Werkstücke eingespannt werden, die etwa einer spanenden Bearbeitung in entsprechenden Bearbeitungsautomaten unterworfen werden sollen, problematisch ist.

Das Bearbeitungsergebnis dieser eingespannten Werkstücke hängt nämlich entscheidend davon ab, dass sie bezüglich ihrer räumlichen Position möglichst exakt zwischen der verfahrbaren und der festen Spannbacke eingespannt werden. Aus dem gleichen Grunde ist es erforderlich, dass der verfahrbare Schlitten praktisch spielfrei im Schlittenbett geführt wird, da sich Toleranzen in der Linearführung zwischen Schlittenbett und Schlitten sofort auf die Endabmessungen des zu bearbeitenden Werkstücks übertragen.

Die Forderung nach einer spielfreien Führung des Schlittens bzw. der mit ihm verbundenen verfahrbaren Backe ist auch deshalb besonders wichtig, weil die erzeugte Spannkraft und die daraus resultierende Gegenkraft am Werkstück nicht auf einer gemeinsamen Ebene wirken, so dass ein Drehmoment entsteht, das den Schlitten bei spielbehafteter Führung anheben bzw. nach unten drücken und verkanten kann.

Bei den handelsüblichen Linearführungen für Spannwerkzeuge werden daher Toleranzen zwischen Schlitten und Schlittenbett gefordert, die möglichst unterhalb von 10 µ liegen sollten.

Es liegt auf der Hand, dass die Herstellung derartiger Linearführungen entsprechend teuer und aufwendig ist.

Der Erfindung liegt die Aufgabe zugrunde, eine aus Schlittenbett und Schlitten bestehende Linearführung zu schaffen, deren Herstellung vereinfacht ist, und mit deren Hilfe Werkstücke oder ähnliches dennoch mit großer Genauigkeit praktisch spielfrei eingespannt werden können.

Dieser Aufgabe wird bei einer Linearführung der gattungsbildenden Art erfindungsgemäß dadurch gelöst, dass die erste Spannbacke gleitend gegen das Schlittenbett anliegt, dass der der ersten verfahrbaren Spannbacke abgewandte Bereich des Schlittens die mit dem Schlittenbett verbundene, zweite Spannbacke untergreift und gleitend gegen sie anliegt, dass im Schlitten oder im Schlittenbett mindestens zwei zueinander beabstandete Paare von gegenüberliegenden Druckstücken angeordnet sind, die in die jeweiligen, gegenüberliegenden Nuten eingreifen und dass die Druckstückpaare bezüglich ihrer Höhenlage relativ zu den Nuten in unterschiedlichen Ebenen angeordnet sind.

Durch diese Maßnahmen wird die verfahrbare erste Spannbacke des Schlitten spielfrei gegen das Schlittenbett bzw. der Schlitten gegen die zweite, feste Spannbacke gedrückt, so dass exakt definierte spielfreie Widerlager vorhanden sind, durch die die dreidimensionale Lage des eingespannten Werkstücks exakt festgelegt ist. Dabei können der Schlitten und das Schlittenbett sowie die Nuten mit vergleichsweise geringer Fertigungsgenauigkeit hergestellt werden, wobei der noch zulässige Toleranzbereich im Gegensatz zum Stand der Technik um eine Zehnerpotenz größer sein kann.

Die im Schlittenbett in Längsrichtung der Bewegungsrichtung des Schlittens verlaufende Nuten sind vorzugsweise als V-förmige Nuten ausgebildet, deren Nutflanken geneigt zueinander stehen. Dadurch greifen bei geeigneter Wahl der Höhenlage der Druckstückpaare die Druckstücke an gegenüberliegenden Flanken an und erzeugen auf diese Weise das eingangs erwähnte Kräftepaar.

Insbesondere bei Verwendung der Linearführung für Spannsysteme ist es vorteilhaft, wenn die Gleitflächen des Schlittens, des Schlittenbettes bzw. der Spannbacken, die gegeneinander anliegen, eben ausgebildet sind. Dadurch liegen diese Bereiche praktisch ohne Abstand spielfrei bündig aufeinander, so daß auch feinste Späne, die bei der Bearbeitung des Werkstückes anfallen, sich nicht zwischen den Gleitflächen festsetzen können, wie es bisher beim Stand der Technik bei Spänen, die innerhalb des Toleranzbereiches der Linearführung lagen, möglich war. Diese Gleitflächen werden im übrigen zweckmäßigerweise geschliffen und gehärtet, so daß praktisch keine Oberflächenrauhigkeiten vorhanden sind und ein spürbarer Verschleiß auch bei langdauerndem Gebrauch nicht vorhanden ist.

Bei einer Ausbildung der Nuten mit V-förmigem Querschnitt ist es zweckmäßig, die Druckstücke als Kugeln oder Kegel auszubilden, die beispielsweise in eine Bohrung des Schlittens eingesetzt und durch eine in der Bohrung angeordnete Spiralfeder vorgespannt sind und gegen die Nutflanken gedrückt werden.

Andererseits ist es auch möglich, die Druckstücke beispielsweise als Federringe oder Federscheiben bzw. Federring- oder Federscheibensegmente auszubilden und in Schlitze oder Bohrungen des Schlittens einzusetzen. Bei der Verwendung von Federringen oder Federringabschnitten kann auf das Einsetzen einer zusätzlichen Druckfeder verzichtet werden.

Bei einer bevorzugten Ausführung der Linearführung weist das Schlittenbett einen etwa U-förmigen Querschnitt auf, in dem der in Längsrichtung verfahrbare Schlitten angeordnet ist. Die Nuten können in Bewegungsrichtung des Schlittens auf den Innenseiten der Längsschenkel des U-Profiles verlaufen, es ist jedoch selbstverständlich auch möglich, die Nuten im Schlitten und die Druckstücke im Schlittenbett vorzusehen, sofern die eingangs erwähnte unterschiedliche Höhenlage der miteinander wirkenden Teile eingehalten wird.

Wie bei den bekannten Spannsystemen kann die Verfahrbarkeit des Schlittens mit Hilfe einer'manuell oder motorisch antreibbaren Spindel erfolgen, die sich gegen ein Widerlager des Schlittenbettes abstützt.

Die Erfindung ist in der Zeichnung beispielsweise beschrieben und wird im nachfolgenden anhand der Zeichnung im einzelnen erläutert. Es zeigen:
- Fig. 1: einen schematischen Schnitt durch ein Spannwerkzeug mit einer beweglichen und einer festen Backe,
- Fig. 2: einen Schnitt durch das Spannwerkzeug gemäß Figur 1 und 4 in Richtung II-II,
- Fig. 3: einen Schnitt durch das Spannwerkzeug gem. Figur 1 und 4 in Richtung III-III und
- Fig. 4: einen schematischen Schnitt durch ein Spannwerkzeug mit zwei beweglichen Spannbacken und einer festen Mittelbacke.

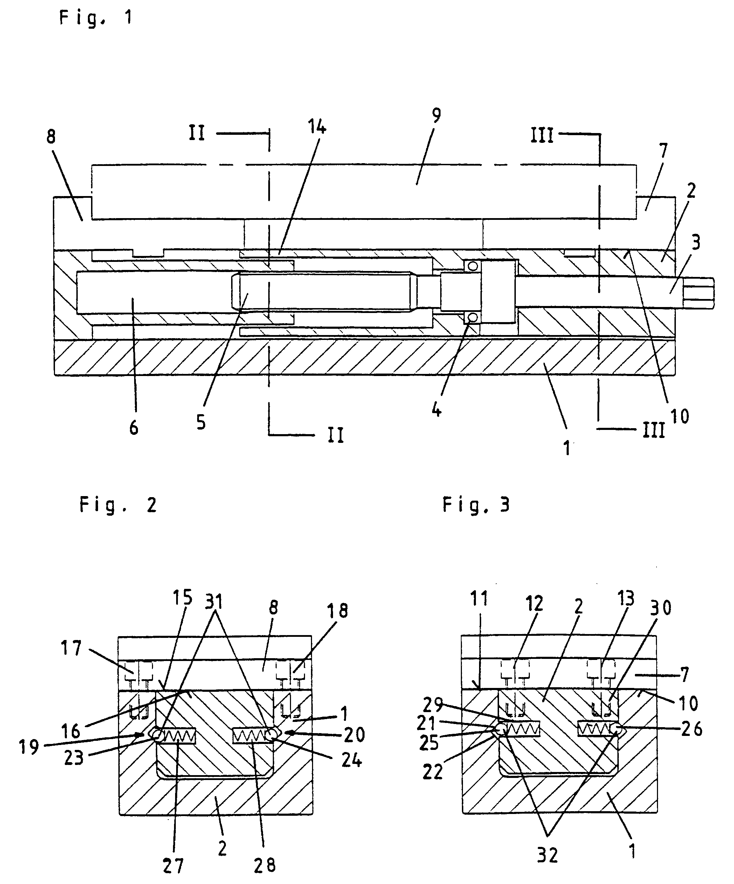

Das in Fig. 1 dargestellte Spannwerkzeug besteht im wesentlichen aus einem U-förmigen Schlittenbett 1, in dem ein Schlitten 2 verfahrbar geführt ist. Zum Verfahren des Schlittens 2 dient eine Gewindespindel 3, die im Schlitten 2 mittels eines Lagers 4 gelagert ist und mit ihrem Ende 5 in eine Höhlung 6 des Schlittenbettes 1 eingreift. Oberhalb des Schlittenbettes 1 ist an der rechten Seite der Darstellung eine verfahrbare Spannbacke 7 angeordnet, die fest mit dem gleichfalls verfahrbaren Schlitten 2 verbunden ist. Der Spannbacke 7 liegt eine feste Spannbacke 8 gegenüber, die ihrerseits fest mit dem Schlittenbett 1 verbunden ist. Zwischen den Spannbacken 7 und 8 kann ein schematisch dargestelltes Werkstück 9 eingespannt werden.

Wie besser aus den Figuren 2 und 3 zu erkennen ist, liegt die verfahrbare Spannbacke 7 mit ihrer Unterseite bzw. Gleitfläche 10 auf der Oberseite bzw. Gleitfläche 11 des Schlittenbettes 1 bündig auf und kann, da sie mit Hilfe der Befestigungsschrauben 12, 13 fest mit dem verfahrbaren Schlitten 2 verbunden ist, in Längsrichtung des Schlittenbettes 1 mit Hilfe der Spindel 3 bewegt werden.

Der Bereich 14 des Schlittens 2, der der verfahrbaren Spannbacke 7 abgewandt ist, untergreift mit seiner Oberseite bzw. Gleitfläche 15 die Unterseite bzw. Gleitfläche 16, der mit Hilfe der Befestigungsschrauben 17 und 18 fest mit dem Schlittenbett 1 verbundene feste Spannbacke 8.

Der Schlitten 2 wird im Schlittenbett 1 mit Hilfe von gegenüberliegenden Nuten 19 und 20 geführt, die auf den Innenseiten der Längsschenkel des U-förmigen Schlittenbettes 1 in Bewegungsrichtung des Schlittens 2 ausgebildet sind und in einer gemeinsamen Horizontalebene liegen.

Die Nuten weisen ein V-förmiges Profil auf, deren Nutenflanken 21 und 22 geneigt zueinander stehen.

In die Nuten 19 und 20 greifen Druckstücke 23, 24 bzw. 25, 26 ein, die in Bohrungen 27, 28 und 29, 30 des Schlittens 2 gehalten werden. Die Druckstücke 23 und 24 sowie 25 und 26 bilden jeweils Druckstückpaare 31, 32, wobei die jeweiligen Druckstückpaare 31, 32 auf gemeinsamen, bzgl. ihrer Höhenlage jedoch unterschiedlichen Horizontalebenen liegen.

Die Druckstücke 23 bis 26 sind als Kugeln ausgebildet, die mit Hilfe von Spiralfedern in die jeweiligen Nuten gedrückt werden.

Durch die unterschiedliche Höhenlage der Druckstückpaare drükken die Kugeln des Druckstückpaars 31 gegen die unteren Nutflanken 22, während die Kugeln des Druckstückpaares 32 gegen die oberen Nutflanken 21 anliegen.

Auf diese Weise wird das in der Beschreibung erwähnte Kräftepaar erzeugt.

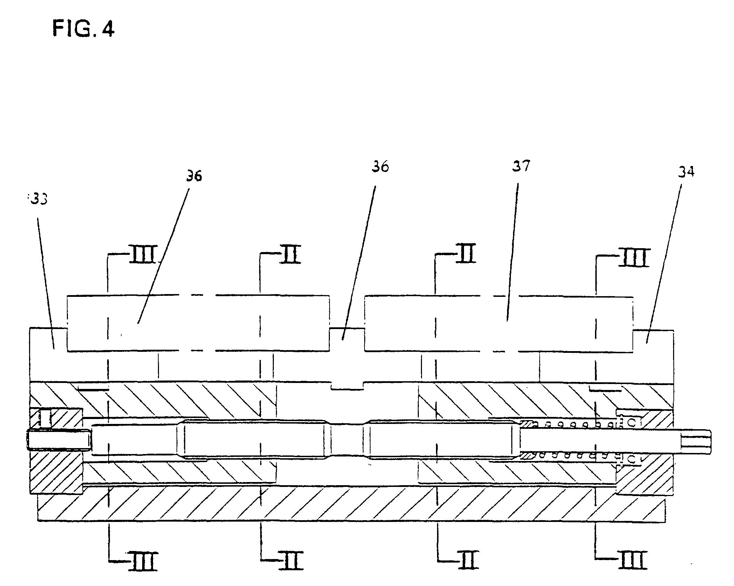

Bei der Ausführungsform eines Spannsystems gemäß Fig. 4 sind zwei verfahrbare Spannbacken 33, 34 und eine feste mittlere Spannbacke 35 vorgesehen, so daß bei dieser Ausführungsform zwei Werkstücke 36, 37 gleichzeitig eingespannt werden können.

### Linearführung

### Bezugszeichenliste

- 1: Schlittenbett
- 2: Schlitten
- 3: Gewindespindel
- 4: Lager
- 5: Ende
- 6: Höhlung
- 7: verfahrbare Spannbacke
- 8: feste Spannbacke
- 9: Werkstück
- 10: Unterseite, Gleitfläche
- 11: Oberseite, Gleitfläche
- 12: Befestigungsschraube
- 13: Befestigungsschraube
- 14: Bereich
- 15: Oberseite, Gleitfläche
- 16: Unterseite, Gleitfläche
- 17: Befestigungsschraube
- 18: Befestigungsschraube
- 19: Nut
- 20: Nut
- 21: Nutflanke
- 22: Nutflanke
- 23: Druckstück
- 24: Druckstück
- 25: Druckstück
- 26: Druckstück
- 27: Bohrung
- 28: Bohrung
- 29: Bohrung
- 30: Bohrung
- 31: Druckstückpaar
- 32: Druckstückpaar
- 33: verfahrbare Spannbacke
- 34: verfahrbare Spannbacke
- 35: feste Spannbacke
- 36: Werkstück
- 37: Werkstück

## Patentansprüche

1. Linearführung, insbesondere für Spannwerkzeuge, mit einem in oder an einem Schlittenbett (1) geführten, verfahrbaren Schlitten (2), der mindestens eine erste Spannbacke (7) trägt, die relativ zu einer mit dem Schlittenbett (1) verbundenen, festen, zweiten Spannbacke (8) verfahrbar ist und im Schlittenbett (1) oder im Schlitten (2) mindestens zwei in Bewegungsrichtung des Schlittens (2) verlaufende, in einer Ebene gegenüberliegende Nuten (19), (20) vorgesehen sind, **dadurch gekennzeichnet, dass** die erste Spannbacke (7) gleitend gegen das Schlittenbett (1) anliegt, dass der der ersten verfahrbaren Spannbacke (7) abgewandte Bereich des Schlittens (2) die mit dem Schlittenbett (1) verbundene, zweite Spannbacke (8) untergreift und gleitend gegen sie anliegt, dass im Schlitten (2) oder im Schlittenbett (1) mindestens zwei zueinander beabstandete Paare (31), (32) von gegenüberliegenden Druckstücken (23), (24) bzw. (25), (26) angeordnet sind, die in die jeweiligen, gegenüberliegenden Nuten (19), (20) eingreifen und dass die Druckstückpaare (31), (32) bezüglich ihrer Höhenlage relativ zu den Nuten (19), (20) in unterschiedlichen Ebenen angeordnet sind.

2. Linearführung nach Anspruch 1, **dadurch gekennzeichnet, dass** die Nuten (19), (20) geneigt zueinander stehende Nutflanken (21), (22) aufweisen.

3. Linearführung nach Anspruch 1 oder 2, **dadurch gekennzeichnet, dass** die Nuten (19), (20) einen V-förmigen Querschnitt aufweisen.

4. Linearführung nach einen der Ansprüche 1 bis 3, **dadurch gekennzeichnet, dass** die Höhenlage der Druckstückpaare (31), (32) derart gewählt ist, dass ein Paar (31) gegen bezüglich ihrer Lage korrespondierenden einen Nutflanken (22) der gegenüberliegenden Nuten (19), (20) und das andere Paar (32) gegen die anderen Nutflanken (21) drückt.

5. Linearführung nach einem der Ansprüche 1 bis 4, **dadurch gekennzeichnet, dass** die Gleitflächen des Schlittens, des Schlittenbetts, und der Schlittenbacken, die gegeneinander anliegen, eben ausgebildet sind.

6. Linearführung nach einem der Ansprüche 1 bis 5, **dadurch gekennzeichnet, dass** die Druckstücke (23 bis 26) als im oder am Schlitten (2) bzw. Schlittenbett (1) federnd gelagerte Kugeln oder Kegel ausgebildet sind.

7. Linearführung nach einem der Ansprüche 1 bis 5, **dadurch gekennzeichnet, dass** die Druckstücke (23 bis 26) als im oder am Schlitten (2) bzw. Schlittenbett (1) befestigte Federringe oder Federscheiben oder Federring- oder Federscheibensegmente ausgebildet sind.

8. Linearführung nach einem der Ansprüche 1 bis 7, **dadurch gekennzeichnet, dass** das Schlittenbett (1) einen etwa U-förmigen Querschnitt aufweist und die Nuten (19), (20) auf den Innenseiten der Längsschenkel verlaufen.

9. Linearführung nach einem der Ansprüche 1 bis 8, **dadurch gekennzeichnet, dass** der Schlitten (2) mittels einer sich gegen das Schlittenbett (1) abstützenden Gewindespindel (3) verfahrbar ist.

## Claims

1. Linear guide, especially for clamping tools, with a moveable slide (2) guided in or on a slide bed (1), and carrying at least one first clamping jaw (7), which is moveable relative to a fixed, second clamping jaw (8) connected with the slide bed (1) and provided with, in the slide bed (1) or in the slide (2) at least two grooves (19), (20), opposite each other in one plane moving in the direction of movement of the slide (2), **characterised in that** the first clamping jaw (7) lies and slides against the slide bed (1), that the region of the slide (2) turned away from the first moveable clamping jaw (7) engages under the second clamping jaw connected with the slide bed (1) and lies and slides against it, that in the slide (2) or in the slide bed (1) at least two pairs (31), (32) of opposite pressure pieces (23), (24) and (25), (26) respectively are disposed at a distance from each other, and engage in the appropriate opposite grooves (19), (20), and that the pairs of pressure pieces (31), (32) are disposed in different planes with regard to their height in relation to the grooves (19), (20),.

2. Linear guide according to Claim 1, **characterised in that** the grooves (19), (20), have groove flanks (21), (22) which are inclined in relation to each other.

3. Linear guide according to Claim 1 or 2, **characterised in that** the grooves (19), (20), have a V-shaped cross-section.

4. Linear guide according to any one of Claims 1 to 3, **characterised in that** the height of the pairs of pressure pieces (31, (32) is chosen so that one pair (31) presses against one groove flank (22) of the opposite grooves (19, 20) corresponding to its position, and the other pair (32) presses against the other groove flanks *[sic]* (21).

5. Linear guide according to any one of Claims 1 to 4, **characterised in that** the gliding surfaces of the slide, the slide bed and the slide jaws which lie opposite each other are smoothly formed.

6. Linear guide according to any one of Claims 1 to 5, **characterised in that** the pressure pieces (23 to 26) are formed as balls or cones spring-mounted in or on the slide (2) or slide bed (1).

7. Linear guide according to any one of Claims 1 to 5, **characterised in that** the pressure pieces (23 to 26) are formed as spring rings or spring plates or spring-ring or spring-plate sections fixed in or on the slide (2) or slide bed (1).

8. Linear guide according to any one of Claims I to 7, **characterised in that** the slide bed (1) has an approximately U-shaped cross-section and the grooves (19), (20) pass along the insides of the longitudinal sides.

9. Linear guide according to any one of Claims 1 to 8, **characterised in that** the slide (2) can be moved by means of a threaded spindle (3) supported against the slide bed (1).

## Revendications

1. Guidage linéaire, en particulier pour des outils de serrage, avec ou dirigés dans un glissière du chariot(1) , à une glissière coulissante (2)disposés et prévus qui porte au moins un premier mors de serrage (7) et qui peut être relativement relié avec la glissière du chariot (1) un deuxième mors de serrage (8) fixé solidement et dans la glissière du chariot (1) ou dans la glissière (2), passant dans au moins deux directions de mouvement des glissières (2) sont prévues dans un niveau plan des rainures contigues (19),(20), **caractérisé en ce que** le premier mors de serrage (7) est ajusté en glissant contre la glissière du chariot (1) que le premier mors de serrage peut être disposé dans une zone détournée de la glissière (2) relié à la glissière du chariot (1), le deuxième mors de serrage (8) fixé solidement s'enclenche sous et en glissant contre ceux-ci n'est n'ajusté que dans la glissière (2) ou dans la glissière du chariot (1)ou sont disposés au moins deux paires se réclamant l'une à l'autre (31), (32) des pièces de pression contigues (23), (24) notamment (25), (26) intervenant respectivement disposés, des rainures (19), (20) et que les paires de pièce de pression (31), (32) soient disposées concernant leur position haute relativement aux rainures (19), (20) dans des plans différents.

2. Guidage linéaire selon la revendication 1, **caractérisé en ce que** les rainures (19), (20) montrent des flancs de rainure (21),(22) se trouvant en oblique l'uns à l'autre.

3. Guidage linéaire selon la revendication 1 ou 2, **caractérisé en ce que** les rainures (19), (20) montrent une coupe transversale de la forme d'un V.

4. Guidage linéaire selon l'une des revendications 1 à 3, **caractérisé en ce que** la position haute des paires de pièces de pression (31), (32) est choisie de telle manière que une paire de pièces de pression (31) contre notamment leur position correspondant à un flanc de rainure (22) des rainures contigues (19), (20) et qu'une autre paire (32) appuie contre les autres flancs de rainure (21).

5. Guidage linéaire selon l'une des revendications 1 à 4, **caractérisé en ce que** les surfaces coulissantes du chariot, de la glissière du chariot et les faces de la glissière de guidage du chariot qui sont ajustées l'une contre l'autre sont conçues de la même manière.

6. Guidage linéaire selon l'une des revendications 1 à 5, **caractérisé en ce que** les pièces de pression (23 à 26) sont formées comme ou dans la glissière (2) notamment glissière du chariot(1)et sont stockées des billes ou cônes souples.

7. Guidage linéaire selon l'une des revendications 1 à 5, **caractérisé en ce que** les pièces de pression(23 à 26) sont formés comme sur ou dans la glissière (2) notamment glissière du chariot (1) fixées à des ressorts circulaires ou en forme de disques ou segments de ressort elastiques en disques ou ressorts circulaires.

8. Guidage linéaire selon l'une des revendications 1 à 7, **caractérisé en ce que** la glissière du chariot (1) montre une coupe transversale sensiblement en forme de U et des rainures (19), (20) courant sur les faces intérieures des montants longitudinaux.

9. Guidage linéaire selon l'une des revendications 1 à 8, **caractérisé en ce que** le chariot (2) est et peut être disposé coulissant contre la glissière du chariot (1) au moyen de l'appui de la broche de filetage (3).
